# EUROPÄISCHE PATENTSCHRIFT

(11) **EP 0 616 630 B1**
(45) Veröffentlichungstag und Bekanntmachung des Hinweises auf die Patenterteilung: **14.02.1996**
(21) Anmeldenummer: 93900041.0
(22) Anmeldetag: 13.12.1992
(51) Int. Cl.: C09K 5/06

(54) **SALZGEMISCHE ZUR SPEICHERUNG VON WÄRMEENERGIE IN FORM VON PHASENUMWANDLUNGSWÄRME**
MIXTURES OF SALTS FOR STORING THERMAL ENERGY AS PHASE TRANSITION HEAT
MELANGES DE SELS ACCUMULATEURS D'ENERGIE THERMIQUE SOUS FORME DE CHALEUR DE CHANGEMENT DE PHASE

(30) Priorität: 14.12.1991 DE 4141306; 10.02.1992 DE 4203835
(43) Veröffentlichungstag der Anmeldung: 28.09.1994
(73) Patentinhaber: MERCK PATENT GmbH, D-64271 Darmstadt (DE); Bayerische Motoren Werke Aktiengesellschaft, D-80788 München (DE)
(72) Erfinder: KNIEP, Rüdiger, D-4018 Langenfeld (DE); KLEIN, Hans, D-6100 Darmstadt (DE); KROESCHELL, Peter, D-6086 Riedstadt 6 (DE)
(86) Internationale Anmeldenummer: EP9202885
(87) Internationale Veröffentlichungsnummer: WO9312193

(56) Entgegenhaltungen:
- EP-A- 0 257 001
- WO-A-89/09249
- GB-A- 2 179 135
- US-A- 4 283 298
- DATABASE WPI Week 7651, Derwent Publications Ltd., London, GB; AN 76-95332X
- PATENT ABSTRACTS OF JAPAN vol. 014, no. 003 8. Januar 1990

## Beschreibung

Die Erfindung betrifft Salzgemische zur Speicherung von Wärmeenergie in Form von Phasenumwandlungswärme. Die Erfindung betrifft weiterhin die Verwendung dieser Salzgemische als Latentwärmespeichermittel zur Speicherung und Nutzung der Abwärme von Kraftfahrzeugmotoren sowie entsprechende Wärmespeicher für den Einsatz in Kraftfahrzeugen.

Eine aus einem beliebigen Energiesystem stammende Wärmeenergie ist nutzbar, wenn sie gespeichert und im Bedarfsfalle aus dem Speicher wieder abgerufen werden kann. Zu dieser Art von Wärmelieferanten gehören zum Beispiel die solare Strahlungsenergie, die Abwärme irgendwelcher Maschinen, z.B. von Kraftfahrzeugmotoren, Prozeßwärme oder auch die häufig aus energiewirtschaftlichen und tariflichen Gründen in den Nachtstunden preisgünstiger angebotene elektrische Energie (Nachtstrom).

So ist insbesondere die Ausrüstung von Kraftfahrzeugen mit einem Wärmespeicher, beispielsweise durch Integration in den Öl- und/oder Kühlmittelkreislauf, dahingehend von Vorteil, daß nach längerem Stillstand der abgekühlte Motor schnell durch die aus einem vorangegangenen Betrieb gespeicherte Wärme wieder auf Betriebstemperatur gebracht werden kann. Hierdurch wird die Warmlaufphase des Motors erheblich reduziert. Bekanntlich ist die Warmlaufphase von Kraftfahrzeugmotoren mit einem erhöhten Kraftstoffverbrauch und ungünstigeren Abgaswerten sowie mit einem erhöhten Motorverschleiß verbunden.

Es ist bekannt, daß beim Schmelzen einer Substanz, d.h. beim Übergang von der festen in die flüssige Phase, Wärme verbraucht, d.h. aufgenommen wird, die, solange der flüssige Zustand bestehen bleibt, latent gespeichert wird und daß diese latente Wärme beim Erstarren, d.h. beim Übergang von der flüssigen in die feste Phase, wieder frei wird. Wichtig ist es nun, Materialien zu finden, deren Schmelztemperatur in einem Bereich liegt, der dem Temperaturniveau der angebotenen Wärme entspricht und die eine hohe Phasenumwandlungswärme aufweisen. So ist es z.B. wünschenswert, daß für die Speicherung der Motorabwärme von Kraftfahrzeugen die Schmelztemperatur des Materials im Bereich von 70-80 °C, vorzugsweise bei ca. 75 °C liegt. Weiterhin müssen solche Materialien bis über den Bereich der maximalen Betriebstemperatur von Kraftfahrzeugen (ca. 125 °C) stabil sein und dürfen auf die entsprechenden Kraftfahrzeug-Aggregate nicht korrosiv wirken.

Darüberhinaus ist es erforderlich, daß derartige Latentwärmespeichermaterialien über eine beliebige Zahl von Schmelz- und Erstarrungszyklen hinweg stabil bleiben und keine Veränderungen des Phasenumwandlungspunktes und der Umwandlungswärme zeigen.

In DE-OS 39 29 900 werden Phasenwechselmaterialien vorgeschlagen, die auf Gemischen von Magnesiumnitrat mit Nitraten der Alkali- bzw. Erdalkalimetalle basieren. Speziell für die Speicherung der Motorabwärme von Kraftfahrzeugen werden Gemische von Magnesiumnitrathexahydrat (Mg (NO₃)₂ · 6 H₂O) und Litiumnitrat (LiNO₃) im Massenverhältnis von ca. 9:1 empfohlen. So wird dort beispielsweise für ein Gemisch, das als aus 92-87 g Mg(NO₃)₂ · 6 H₂O und 8-13 g LiNO₃ bestehend definiert wird, eine Schmelztemperatur von 70 ± 2 °C und eine Schmelzwärme von 54,32 Wh/kg (entsprechend 195,6 J/g) angegeben.

Es hat sich jedoch gezeigt, daß das bekannte Phasenwechselmaterial bereits nach wenigen Schmelz- und Erstarrungszyklen zur Phasenseparation neigt. Es wird dann nicht mehr vollständig aufgeschmolzen, wodurch sich seine Umwandlungswärme und die Speicherkapazität drastische vermindert.

Genauere Untersuchungen an diesem Gemisch haben darüberhinaus ergeben, daß die Phasenumwandlungswärme lediglich bei ca. 158 J/g liegt und somit nicht optimal ist. Ungünstig ist auch, daß die Schmelztemperatur gerade am unteren Ende des wünschenswerten Bereichs liegt.

Aufgabe der Erfindung ist es daher, ein Salzgemisch zur Verwendung als Latentwärmespeichermittel für die Wärmespeicherung insbesondere des Kühlwassers von Kraftfahrzeugen, bereitzustellen, das nach einer unbegrenzten Zahl von Schmelz- und Erstarrungszyklen eine unverändert hohe Umwandlungswärme zeigt, und das hinsichtlich Schmelztemperatur und Phasenumwandlungswärme optimal ist.

Es wurde nun gefunden, daß Salzgemische von Mg(NO₃)₂ · 6 H₂O und LiNO₃ im Massenverhältnis 86-81 : 14-19 und speziell das eutektische Gemisch dieser beiden Salze im Massenverhältnis 83,7:16,3 den vorbekannten Gemischen erheblich überlegen sind. So liegen die Schmelztemperaturen der Salzgemische dieser Massenverhältnisse deutlich über 72 °C, insbesondere über 75 °C. Eine höhere und damit näher an der Betriebstemperatur von Kraftfahrzeugmotoren liegende Schmelztemperatur ist für Kraftfahrzeugwärmespeicher besonders wünschenswert. Weiterhin weisen die erfindungsgemäßen Salzgemische eine deutlich höhere Kristallisations- bzw. Schmelzenthalpie auf als entsprechende Salzgemische mit anderen Massenverhältnissen. In der Praxis bedeutet dies, daß beispielsweise bei vorgegebener Salzmenge mit den erfindungsgemäßen Salzgemischen eine höhere Wärmemenge am Phasenumwandlungspunkt aufgenommen bzw. wieder zur Verfügung gestellt wird. Für einen vorgegebenen Wärmemengenbedarf ist wiederum eine geringere Menge an Salzgemisch erforderlich, so daß entsprechende Wärmespeicher kleiner und leichter gebaut werden können.

Besonders vorteilhaft ist das eutektische Gemisch von Mg(NO₃)₂ · 6 H₂O und LiNO₃. In diesem Gemisch liegen die Komponenten im Massenverhältnis 83,7 : 16,3 vor. Dieses Gemisch zeigt mit einer Schmelztemperatur von 75,6 °C und mit einer Phasenumwandlungswärme von 171,5 J/g optimale Eigenschaften.

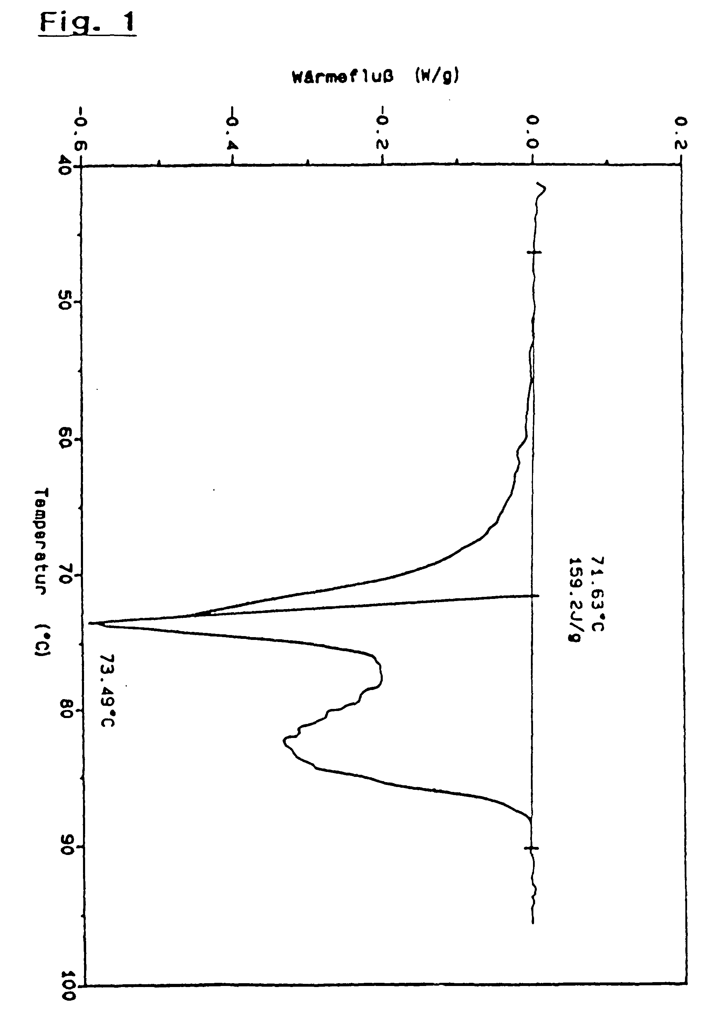

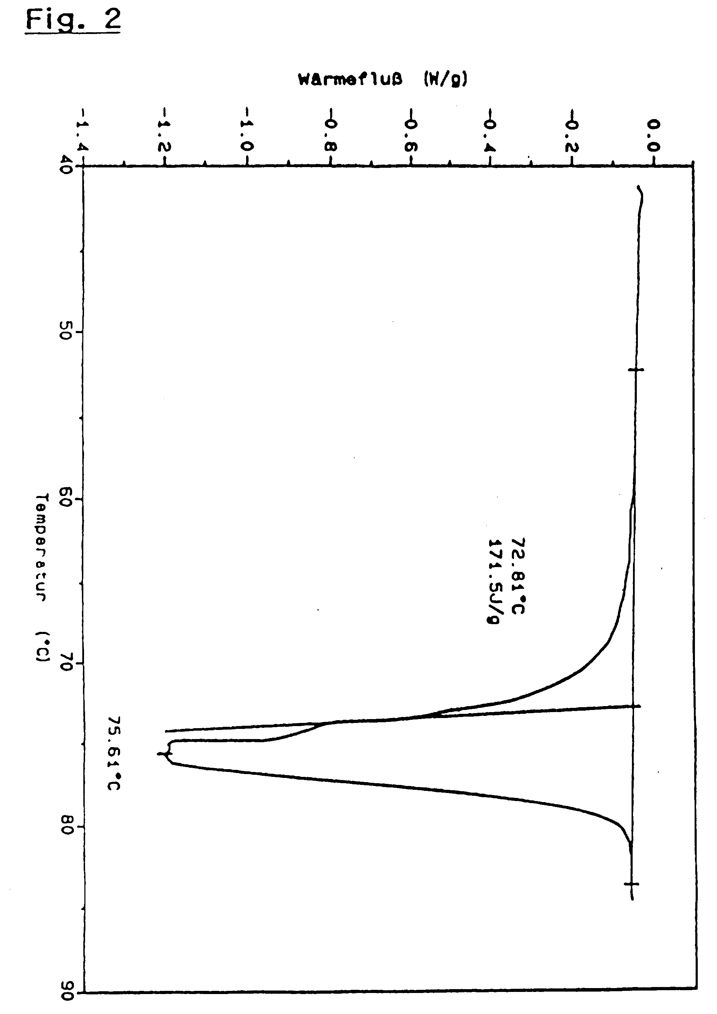

Fig. 1 zeigt das DSC (Differential Scanning Calorimetry)-Diagramm eines Salzgemisches aus Mg(NO₃)₂ · 6 H₂O und LiNO₃ in einem Gewichtsverhältnis von 9 : 1 entsprechend DE-OS 39 29 900 und Fig. 2 das DSC-Diagramm eines erfindungsgemäßen Salzgemisches aus 83,7 Gewichtsteilen Mg(NO₃)₂ · 6 H₂O und 16,3 Gewichtsteilen LiNO₃. Es ist ersichtlich, daß nach Fig. 1 zwei Maxima in einem breiten Schmelzbereich von ca. 70 °C bis 88 °C auftreten, während nach Fig. 2 nur ein einziges scharfes Maximum im Bereich von ca. 71 bis 78 °C mit Zentrum bei 75,6 °C auftritt. Die Schmelzwärme, die durch Integration der Maxima berechnet wurde, betrug bei dem Material nach DE-OS 39 29 900 159,2 J/g und bei dem erfindungsgemäßen Salzgemisch 171,5 J/g.

Besonders überraschend ist der Befund, daß die erfindungsgemäßen Salzgemische überaus stabil sind und praktisch über eine unbegrenzte Zahl von Schmelz- und Erstarrungszyklen hinweg keine Veränderungen des Phasenwandlungspunktes und der Umwandlungswärme zeigen.

In diesem Zusammenhang hat es sich als wesentlich herausgestellt, daß die Herstellung des erfindungsgemäßen Latentwärmespeichermaterials in der Weise erfolgt, daß das Gemisch aus Magnesiumnitrathexahydrat und Lithiumnitrat in einem geschlossenen Gefäß mit geringem freiem Volumen geschmolzen wird. Das heißt, nach dem Schmelzen des Gemisches sollten mehr als 70 % des Gefäßes von der Schmelze gefüllt sein. Durch ein zu großes freies Volumen des geschlossenen Gefäßes kommt es nämlich zu einer geringfügigen Entwässerung des Gemischs, beispielsweise durch an der freien Oberfläche der Gefäßinnenwand kondensierende Wassertropfen, wodurch signifikante Änderungen der Umwandlungswärme des Salzgemisches auftreten. Um auch nach größeren Zyklenzahlen keine signifikanten Einbußen in den Wärmeumsätzen zu erhalten, sollte das erfindungsgemäße Latentwärmespeichermittel daher auch in völlig geschlossenen Systemen eingesetzt werden.

Um das erfindungsgemäße Latentwärmespeichermittel mit einer auch nach einer beliebigen Zahl von Schmelz- und Erstarrungszyklen unverändert hohen Schmelzwärme von mindestens 170 J/g zu erhalten, hat es sich weiterhin als wesentlich herausgestellt, daß das zur Bildung des Gemischs verwendete Magnesiumnitrathexahydrat eine Schmelzwärme von vorzugsweise 110 J/g bis 135 J/g und mehr, aufweist. Es hat sich nämlich gezeigt, daß das im Handel erhältliche Magnesiumnitrathexahydrat hinsichtlich seiner Schmelzwärme von Charge zu Charge erhebliche Schwankungen aufweist, die sich in entsprechender Weise auf die Schmelzenthalpie des Salzgemisches auswirken.

Die Ursache für diese Schwankungen konnten noch nicht abschließend geklärt werden. Vermutlich sind herkunft- bzw. herstellungsbedingte Schwankungen des Kristallwassergehaltes die Ursache. In jedem Falle ist der angegebene Schmelzwärmebereich ein sicherer Indikator für die Eignung des Materials.

Es konnte weiterhin festgestellt werden, daß - und auch dies ist überraschend - Mg(NO₃)₂ · 6 H₂O dimorph ist, wobei die Umwandlungstemperatur zwischen den beiden Kristallmodifikationen bei etwa 72 °C und die Umwandlungswärme bei 12 J/g liegt. Bei dem erfindungsgemäßen Latentwärmespeichermaterial wird diese Umwandlungswärme zwischen den beiden Kristallmodifikationen des Magnesiumnitrathexahydrats offenbar in die Gesamtumwandlungswärme integriert.

Wie röntgengraphische Untersuchungen gezeigt haben, sind die Gitterkonstanten des Mg(NO₃)₂ · 6 H₂O in einem durch Schmelzen erhaltenen Gemisch aus Mg(NO₃)₂ · 6 H₂O und LiNO₃ signifikant verkleinert. Dies dürfte auf eine partielle Mischkristallbildung im Sinne von MgₓLi₂₋₂ₓ(NO₃)₂ · 6 H₂O zurückzuführen sein und erklärt zugleich die Feststellung, daß in dem Gemisch nach dem Schmelzen freies LiNO₃ nur noch in sehr untergeordneter Menge mit Hilfe von Röntgenpulverdiagrammen identifiziert werden kann.

Bei den erfindungsgemäßen Salzgemischen, bei denen das Magnesiumnitrathexahydrat zum Lithiumnitrat in einem Massenverhältnis von 86 : 14 bis 81 : 19, insbesondere von 83,7 : 16,3 (entsprechend einem Verhältnis von ca. 3,5 bis ca. 45 Mol-% LiNO₃ zu ca. 55 bis ca. 65 Mol-% Mg(NO₃)₂ · 6 H₂O, insbesondere ca. 40 Mol-% LiNO₃ zu ca. 60 Mol-% Mg(NO₃)₂ · 6 H₂O) vorliegt, stellen die Mischkristalle aus MgₓLi₂₋₂ₓ(NO₃)₂ · 6 H₂O praktisch die Hauptkomponente dar. Abgesehen von den röntgengraphischen Daten sind diese Mischkristalle durch einen strahlig/nadeligen Habitus gekennzeichnet. Die Bildung dieser Mischkristalle ist bisher nicht bekannt. Die Erfindung beruht daher auch auf diesem neuen Effekt.

Die erfindungsgemäßen Salzgemische sind somit besonders gut als Latentwärmespeichermittel für die Speicherung und Nutzung der Abwärme von Kraftfahrzeugmotoren und somit für die Anwendung in entsprechenden Latentwärmespeichern für den Einsatz in Kraftfahrzeugen geeignet.

### Beispiel

Zur Herstelung der Mischung werden die Komponenten Mg(NO₃)₂ · 6 H₂O und LiNO₃ in einem Massenverhältnis von 83,7 : 16,3 in einem hermetisch geschlossenen Gefäß in einem Wasserbad bei einer Temperatur von ca. 90 °C so lange erhitzt, bis eine klare Schmelze entstanden ist. Das freie Volumen im Reaktionsgefäß betrug nach dem Schmelzen ca. 15 %. Nach Erhalt einer homogenen, klaren Schmelze wird das System abgekühlt oder auf Raumtemperatur abgeschreckt. Das Kristallwachstum der Hauptkomponente der Mischung MgₓLi₂₋₂ₓ(NO₃)₂· 6 H₂O ist durch einen strahlig/nadeligen Habitus gekennzeichnet.

## Patentansprüche

1. Salzgemische auf Basis von Magnesiumnitrat und Lithiumnitrat zur Speicherung und Nutzung von Wärmeenergie in Form von Phasenumwandlungswärme, dadurch gekennzeichnet, daß sie aus Gemischen von Mg(NO₃)₂ · 6 H₂O und LiNO₃ im Massenverhältnis von 86-81 : 14-19 bestehen.

2. Salzgemisch nach Anspruch 1, dadurch gekennzeichnet, daß es aus dem eutektischen Gemisch von Mg(NO₃)₂ · 6 H₂O und LiNO₃ im Massenverhältnis 83,7 : 16,3 besteht.

3. Verfahren zur Herstellung von Salzgemischen nach den Ansprüchen 1 oder 2, dadurch gekennzeichnet, daß das Gemisch aus Magnesiumnitrathexahydrat und Lithiumnitrat in einem geschlossenen Gefäß geschmolzen wird, wobei der Füllungsgrad mehr als 70 % beträgt.

4. Verfahren nach Anspruch 3, dadurch gekennzeichnet, daß das zur Bildung des Gemischs verwendete Magnesiumnitrathexahydrat eine Schmelzwärme zwischen 100 J/g und 135 J/g aufweist.

5. Verwendung von Salzgemischen gemäß den Ansprüchen 1 oder 2 als Latentwärmespeichermittel in Wärmespeichern für die Speicherung und Nutzung der Abwärme von Kraftfahrzeugmotoren.

6. Wärmespeicher zur Speicherung und Nutzung der Abwärme von Kraftfahrzeugmotoren enthaltend ein Salzgemisch nach den Ansprüchen 1 oder 2 als Latentwärmespeichermittel.

## Claims

1. Salt mixtures on the basis of magnesium nitrate and lithium nitrate for storing and utilizing thermal energy in the form of heat of phase transformation characterized in that they comprise mixtures of Mg(NO₃)₂ · 6 H₂O and LiNO₃ in a mass ratio of 86-81 : 14-19.

2. Salt mixture according to Claim 1, characterized in that it comprises the eutectic mixture of Mg/NO₃)₂ · 6 H₂O and LiNO₃ in a mass ratio 83.7 : 16.3.

3. Process for preparing salt mixtures according to Claims 1 or 2, characterized in that the mixture of magnesium nitrate hexahydrate and lithium nitrate is fused in a sealed vessel, the filling ratio being more than 70 %.

4. Process according to Claim 3, characterized in that the magnesium nitrate hexahydrate used to form the mixture has a heat of fusion of from 100 J/g to 135 J/g.

5. The use of salt mixtures according to Claims 1 or 2 as latent heat storage media in heat reservoirs for storing and utilizing the waste heat of motor vehicle engines.

6. Heat reservoir for storing and utilizing the waste heat of motor vehicle engines, containing a salt mixture according to Claims 1 or 2 as a latent heat storage medium.

## Revendications

1. Mélanges de sels à base de nitrate de magnésium et de nitrate de lithium pour le stockage et l'utilisation d'énergie thermique sous forme de chaleur de changement de phase, caractérisés en ce qu'ils sont constitués de mélanges de Mg(NO₃)₂ · 6 H₂O et de LiNO₃ dans le rapport pondéral 86-81 : 14-19.

2. Mélange de sels selon la revendication 1, caractérisé en ce qu'il est constitué du mélange eutectique de Mg(NO₃)₂ · 6 H₂O et de LiNO₃ dans le rapport pondéral 83,7 : 16,3.

3. Procédé pour la préparation de mélanges de sels selon la revendication 1 ou 2, caractérisé en ce que l'on fond le mélange de nitrate de magnésium hexahydraté et de nitrate de lithium dans un récipient fermé, le degré de remplissage étant supérieur à 70%.

4. Procédé selon la revendication 3, caractérisé en ce que le nitrate de magnésium hexahydraté utilisé pour la formation du mélange présente une chaleur de fusion comprise entre 100 J/g et 135 J/g.

5. Utilisation des mélanges de sels selon la revendication 1 ou 2 comme accumulateur de chaleur latente dans les accumulateurs thermiques pour le stockage et l'utilisation de la chaleur d'échappement des moteurs de véhicules.

6. Accumulateur thermique pour le stockage et l'utilisation de la chaleur d'échappement des moteurs de véhicules contenant un mélange de sels selon la revendication 1 ou 2 comme accumulateur de chaleur latente.
